# EUROPEAN PATENT SPECIFICATION

(11) **EP 1 500 045 B1**
(45) Date of publication and mention of the grant of the patent: **11.10.2006**
(21) Application number: 03710132.6
(22) Date of filing: 03.04.2003
(51) Int. Cl.: G06T 3/60, H04N 1/387

(54) **IMAGE ROTATION CORRECTION FOR VIDEO OR PHOTOGRAPHIC EQUIPMENT**
BILDDREHUNGSKORREKTUR FÜR VIDEO- UND FOTOGRAPHISCHE GERÄTE
CORRECTION DE ROTATION D'IMAGE POUR EQUIPEMENT VIDEO OU PHOTOGRAPHIQUE

(30) Priority: 16.04.2002 GB 0208654
(43) Date of publication of application: 26.01.2005
(73) Proprietor: Koninklijke Philips Electronics N.V., 5621 BA Eindhoven (NL)
(72) Inventor: THOMASON, Graham G. Philips I.P. & Standards, Redhill, Surrey RH1 5HA (GB)
(74) Representative: White, Andrew Gordon
(86) International application number: PCT/IB2003/001363
(87) International publication number: WO 2003/088147

(56) References cited:
- EP-A- 0 980 181
- GB-A- 2 307 133
- US-B1- 6 191 405

## Description

The invention relates to the processing of image information, particularly in video or photographic equipment, and to apparatus for recording images such as video or photographic images.

Cameras, such as video or still digital cameras, are frequently used by amateurs who may have difficulties in correctly orienting the camera. There is thus a need for a camera capable of reducing the effect of poor orientation.

US 5,764,291 describes a camera having an orientation signal that outputs one of four values, indicating left, right, inverted or upright operation. This enables the camera orientation to be correctly recorded as one of these four orientations.

UK patent application GB2307133 describes an image stabilization system, wherein a sequence of images are rotated such that all of the images lie at the same rotation to prevent information from the recorded scene being lost. However multiple images are required for the system to work and there is no way of referencing the images' orientation to the real world.

US patent US6191405 describes a scanner where the scanned image is rotated to make a document in the scanned image appear in the correct orientation. However this technique requires the scanned image to comprise a document whose edges can be detected to determine the amount of rotation required.

European patent application EP0980181 describes a movie camera apparatus where the operator can view a screen showing a video sequence that has been rotated to aid the camera operator in performing ROLL camera movements. However this disclosure is directed towards image stabilization, and is unsuitable for reducing the effects of poor camera orientation.

According to the invention, there is provided an image recording apparatus comprising: a lens; a sensor for capturing an image projected by the lens and outputting image data; a rotation sensor for measuring the angle of rotation of the image recording apparatus about a horizontal axis to an accuracy of 5° or better and outputting corresponding angle data; and a data storage device (12) for storing said captured image on the basis of both the image data and the angle data.

In this way, the image data can be used to output a corrected image with the horizontal of the scene captured by the camera displayed horizontally even if the camera is not exactly aligned.

The image recording apparatus according to the invention thus has a different effect and purpose to that disclosed in US 5,764,591. US 5,764,591 discloses recording one of four basic camera orientations, i.e. portrait and landscape each in two possible orientations. In contrast, the apparatus according to the invention corrects for fine misalignment between the actual camera orientation and the desired basic orientation.

Preferably, the accuracy of the rotation sensor is much better than 5°, i.e. 2° or better, or further preferably 1 ° or better, or even 0.5° or better.

Conveniently, the stored image data can simply be the data output by the digital recording sensor and the angle measured by the rotation sensor, leaving correction to occur on playback.

Alternatively, the camera may include a correction module for correcting the image data captured by the camera based on the output of the digital recording sensor and storing the corrected image data in the memory.

The camera may be a stills camera or a video camera. The data carrier may be any convenient form of memory, including a tape, a flash memory, or any other memory suitable for storing digital data.

In a particularly beneficial embodiment, the digital recording sensor has a plurality of pixels arranged as a normal rectangular frame together with additional pixels arranged around the periphery of the normal frame. The additional pixels are not used for an image that is recorded with the camera vertical, but provide the additional pixels needed to deliver a rotated image with the same size of rectangular frame.

Alternatively, the rotated image may be resized slightly compared with the normal image.

In a particularly preferred embodiment, the pixels of the digital recording sensor are arranged as a circular array to allow rotation of the image to an arbitrary angle without needing to resize the image frame.

The pixels may be arranged as a hexagonal array.

A plurality of sensors may be provided to allow for image correction in a number of planes, for example corrections for rotation and tilt. The camera may be able to use the information from the sensors to record a panoramic image by stitching together a plurality of individual images.

The invention also relates to a camera as set out above incorporated into a further device, including for example a mobile telephone, or computer.

In another aspect, the invention relates to a method of processing image information, including capturing image information in a camera; measuring the orientation of the camera with respect to vertical to an accuracy of better than 5°, and recording image data based on the image information and the measured orientation of the camera.

The step of recording image data may include recording the image information and the measured orientation of the camera as separate pieces of data. The method may further include correcting the recorded image data based on the measured orientation of the camera; and replaying the corrected image information.

For a better understanding of the invention, embodiments will now be described, purely by way of example, with reference to the accompanying drawings, in which:

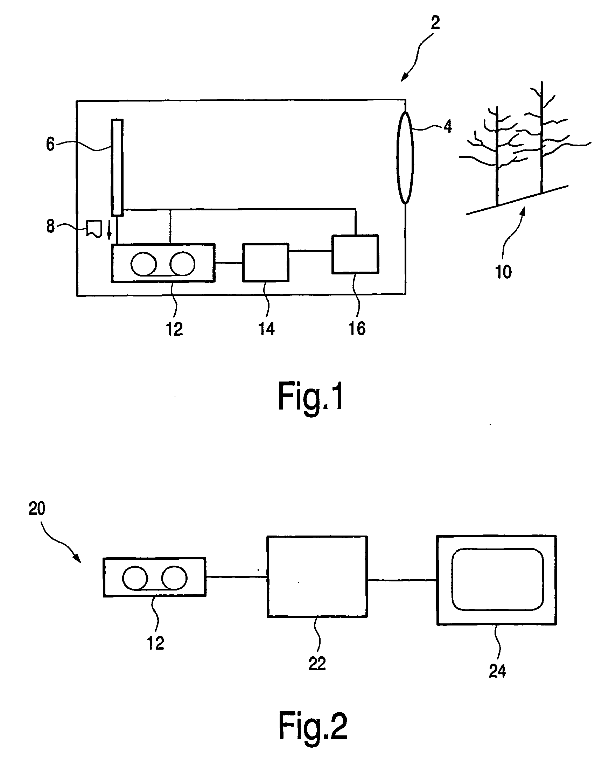

Figure 1 is a schematic drawing of a camera according to the invention;
Figure 2 is a schematic drawing of replay apparatus according to the invention;
Figure 3 is a schematic illustrating the operation of a method according to the invention;
Figure 4 is an illustration of the frame area;
Figure 5 illustrates a circular image frame;
Figure 6 illustrates a frame aspect ratio of 760:480 in a circular image frame; and
Figure 7 illustrates a frame aspect ratio of 1:1 in a circular image frame.

A camera 2 includes a lens 4 and a charge-coupled device (CCD) 6 which acts as a sensor to capture image data 8 representing a scene 10 in front of the camera. The camera may record either still images or moving images, in the latter case by capturing a sequence of items of image data 8 representing sequential frames of the moving image.

The camera 2 also includes memory 12 for recording the image data 8. The memory is in the example shown a tape, although the skilled person will be familiar with many other forms of memory suitable for storing still or video images and these may also be used. For example, the memory may be a solid state memory such as a flash memory, a removable memory card, a magnetic disc, an optically recordable disc or film.

A rotation sensor 14 is provided that measures the angle of the camera to the vertical and outputs a corresponding measurement signal. This angle is recorded in the memory 12. The rotation sensor is an accurate accelerometer.

Suitable solid state accelerometers are commercially available at moderate cost with an accuracy of 1°. These accelerometers include a micro-etched tongue that bends under gravity and so changes a capacitance. Improved performance is available at higher cost. Other suitable devices are sold as "tilt meters".

The camera 2 is under the control of camera processor 16. The camera processor 16 may be arranged to be switchable between a correction mode measuring and storing the angle information for correcting the image and a normal mode in which the rotation sensor is not used.

A playback device 20 is provided that can accept memory 12 and process the recorded image data 8 and rotation angle in replay processor 22. The processed image data is played back on display device 24, for example a television set. It will be appreciated by the skilled person that the replay processor 22 may be incorporated in camera 2 and may indeed be the same processor as camera processor 16.

The processor 22 can operate in a correction mode that corrects for inaccurate orientation of the camera with respect to the vertical. Thus, the processor 22 uses the recorded rotation angle information to cause an image to be displayed on display 24 that has the horizontal horizontal, even if the camera was slightly misaligned when the image was recorded.

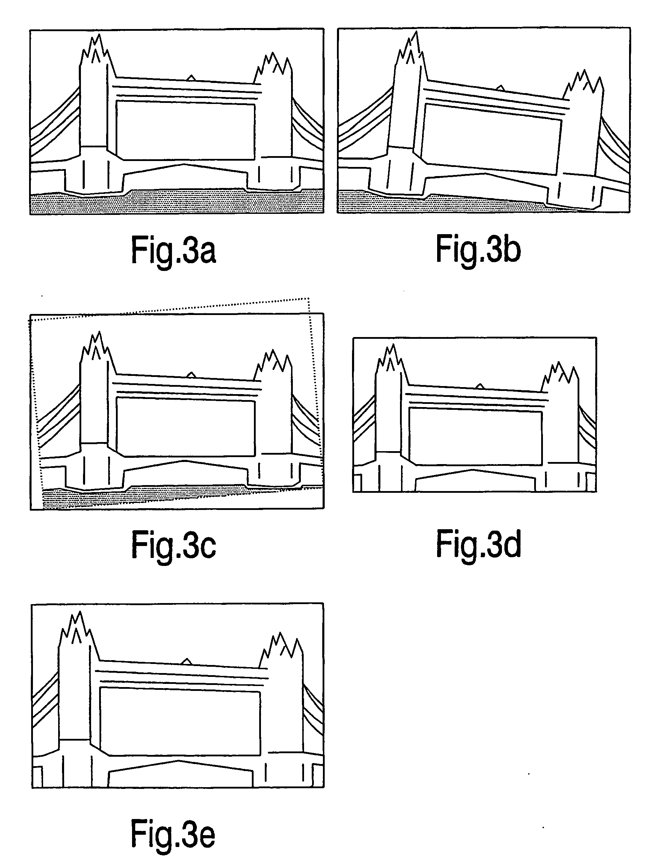

Figure 3 illustrates the use of the system. Figure 3a shows the image that the user should have taken i.e. with the camera horizontally aligned. Figure 3b shows the image taken with a camera angle at an angle of about 10° to the vertical. The true horizontal in the image is thus also at an angle of 10° to the horizontal in the recorded image.

The image as shown in Figure 3b is recorded in the memory together with the data item that records the camera angle.

On replay, the processor 22 calculates the image on display 24 as shown in Figure 3c, with a rotation correction applied using the camera item data angle by replay processor 22 so that true horizontals appear as horizontal. Some of the image frame of the rotation corrected image is blank, as may be seen. Accordingly, the image is cropped to eliminate blank space as illustrated in Figure 3d. Frame 40 represents the recorded image and frame 42 represents the image frame of the displayed image.

As illustrated in Figure 3e, the corrected image 42 is resized so that the final image frame 44 is the same size as original image frame 40.

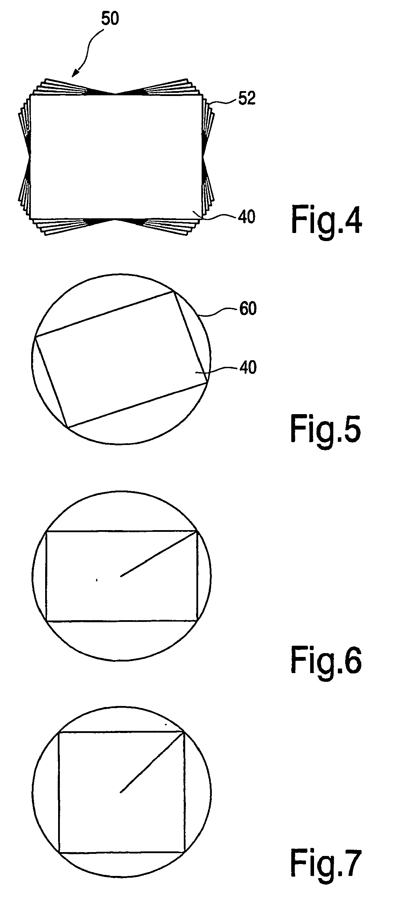

In a modification of the invention, illustrated in Figure 4, the recorded image area 50 is greater than that of the nominal image frame 40 in order that the image may be rotated without resizing. Marginal pixels 52 outside the nominal frame 40 may be switched on only when required to avoid excessive power drain when the automatic alignment feature is not in use.

In a further modification, the sensor array may be circular to enable arbitrary rotation to take place without any loss at the edges. Figure 5 illustrates such a circular sensor 60 with nominal image frame 40. Rotation to any angle is possible without size reduction. The individual pixels of circular sensor 60 may be arranged on a hexagonal grid.

The aspect ratio of image frame 40 in circular sensor array 60 changes the ratio of the circle within the image frame. For example, a rectangle of aspect ratio 760:480 as illustrated in Figure 6 gives a useful area ratio of 57.48% of the area of the circle, whereas a square of aspect ratio 1:1 as illustrated in Figure 7 gives a useful aspect ratio of 63.66%. The maximum area of the circular sensor is used in a substantially square frame, of aspect ratio in the range 1:0.7 to 1:1.4, preferably 1:0.9 to 1:1.1.

The rotation sensor 14 may be a multiple angle rotation sensor, capable of measuring orientation about more than 1 axis and storing the result in memory 12. The sensor may include a plurality of accelerometers. The stored information may then be used, for example, to stitch together a high quality image from several successive image to make up a panoramic images using the orientation information to accurately align and stitch together the different still images.

In an alternative embodiment, the processor 16 may function as a correction module by taking the image captured by the sensor 6 and the angle of orientation of the camera 2 as output by rotation sensor 14, correcting the image data so that the image is accurately horizontal and storing the corrected image in memory 12.

The invention is not limited to the embodiments described above and the skilled person will be aware of many modifications that may be implemented.

In particular, the invention is applicable to any form of camera, whether a stills camera, a video camera, or a camera capable of both stills and video operation.

Although the invention is described with relation to a digital camera, the invention may also be used with an analogue camera recording images directly on a recordable medium acting as the memory as well as the recording sensor. It is in this case necessary to also record the angle information on the recordable medium, but technology for recording additional information is well known to the skilled person in both the fields of motion picture photography and still picture photography.

The invention is also applicable to the case where the camera is incorporated in other apparatus, such as a mobile telephone or computer.

## Claims

1. Image recording apparatus comprising:
a lens (2);
a sensor (6) for capturing an image projected by the lens and outputting image data;
a rotation sensor (14) for measuring the angle of rotation of the image recording apparatus about a horizontal axis to an accuracy of 5° or better and outputting corresponding angle data; and
a data storage device (12) for storing image data based on the captured image data and the angle data.

2. Image recording apparatus according to claim 1 wherein the rotation sensor (14) has a precision of better than 1°.

3. Image recording apparatus according to claim 1 or 2 wherein the sensor (6) for capturing an image is an optical sensor for outputting a signal representing the image.

4. Image recording apparatus according to claim 3 wherein the apparatus (12) is arranged to store the data output by the sensor (6) and a data item representing the angle measured by the rotation sensor.

5. Image recording apparatus according to claim 3 further comprising a correction module (16) for correcting the captured image data based on the output of the rotation sensor and storing the corrected image data in the memory.

6. Image recording apparatus according to any preceding claim wherein the sensor (6) has a plurality of pixels arranged as a normal rectangular frame corresponding to an unrotated image together with additional pixels (52) arranged around the periphery of the normal frame to provide additional image data for use when rotating the captured image.

7. Image recording apparatus according to any preceding claim wherein the pixels of the sensor (6) are arranged as a circular array to allow rotation of the image to an arbitrary angle without needing to resize the image frame.

8. Image recording apparatus according to any preceding claim comprising a plurality of sensors (6) to allow for image correction in a number of planes.

9. A method of processing image information, including:
capturing image information in a camera (2);
measuring the angle of orientation of the camera with respect to the true horizontal to an accuracy of better than 5°, and
recording image data based on the image information and the measured orientation of the camera (2).

10. A method according to claim 9, wherein the step of recording image data records the image information and the measured orientation of the camera, the method further comprising the steps of:
correcting the recorded image data based on the measured orientation of the camera (2); and
replaying the corrected image information.

## Patentansprüche

1. Bildaufzeichnungsgerät, das die nachfolgenden Elemente aufweist:
- eine Linse (2);
- einen Sensor (6) zum Einfangen eines von der Linse projizierten Bildes und zum Ausliefern von Bilddaten.
- einen Drehungssensor (14) zum Messen des Drehungswinkels des Bildaufzeichnungsgeräts um die horizontale Achse mit einer Genauigkeit von 5° oder besser und zum Ausliefern entsprechender Winkeldaten; und
- eine Datenspeicheranordnung (12) zum Speichern des genannten eingefangenen Bildes, und zwar auf Basis der Bilddaten und der Winkeldaten.

2. Bildaufzeichnungsgerät nach Anspruch 1, wobei der Drehungssensor (14) eine Genauigkeit besser als 1° hat.

3. Bildaufzeichnungsgerät nach Anspruch 1 oder 2, wobei der Sensor (6) zum Einfangen eines Bildes ein optischer Sensor ist zum Ausliefern eines Signals, das das Bild darstellt.

4. Bildaufzeichnungsgerät nach Anspruch 3, wobei die Anordnung (12) dazu vorgesehen ist, die von dem Sensor (6) ausgelieferten Daten und ein Daten-Item, das den von dem Drehungssensor gemessenen Winkel darstellt, zu speichern.

5. Bildaufzeichnungsgerät nach Anspruch 3, das weiterhin ein Korrekturmodul (16) aufweist zum Korrigieren der eingefangenen Bilddaten auf Basis des Ausgangssignals des Drehungssensors und zum Speichern der korrigierten Bilddaten in dem Speicher.

6. Bildaufzeichnungsgerät nach einem der vorstehenden Ansprüche, wobei der Sensor (6) eine Anzahl Pixel aufweist, die wie ein normaler rechteckiger Rahmen entsprechend einem nicht gedrehten Bild zusammen mit zusätzlichen Pixeln (52) um den Umfang des normalen Rahmens gegliedert sind zum Liefern zusätzlicher Bilddaten zur Verwendung beim Drehen des eingefangenen Bildes.

7. Bildaufzeichnungsgerät nach einem der vorstehenden Ansprüche, wobei die Pixel des Sensors (6) wie eine kreisförmige Anordnung gegliedert sind um eine Drehung des Bildes über einen beliebigen Winkel zu ermöglichen, ohne dass die Größe des Bildrahmens geändert werden muss.

8. Bildaufzeichnungsgerät nach einem der vorstehenden Ansprüche, mit einer Anzahl Sensoren (6) um eine Bildkorrektur in einer Anzahl Ebenen zu ermöglichen.

9. Verfahren zum Verarbeiten von Bildinformation, das die nachfolgenden Verfahrensschritte umfasst:
- das Einfangen von Bildinformation in einer Kamera (2);
- das Messen des Orientierungswinkels der Kamera gegenüber der richtigen Horizontalen mit einer Genauigkeit besser als 5°, und
- das Aufzeichnen von Bilddaten auf Basis der Bildinformation und der gemessenen Orientierung der Kamera (2).

10. Verfahren nach Anspruch 9, wobei der Verfahrensschritt der Aufzeichnung von Bilddaten die Bildinformation und die gemessene Orientierung der Kamera aufzeichnet, wobei das Verfahren weiterhin die nachfolgenden Verfahrensschritte umfasst:
- das Korrigieren der aufgezeichneten Bilddaten auf Basis der gemessenen Orientierung der Kamera (2), und
- das Wiedergeben der korrigierten Bildinformation.

## Revendications

1. Appareil d'enregistrement d'image comprenant:
une lentille (2);
un capteur (6) pour capter une image qui est projetée par la lentille et pour sortir des données d'image;
un capteur de rotation (14) pour mesurer l'angle de rotation de l'appareil d'enregistrement d'image autour d'un axe horizontal avec une précision égale ou inférieure à 5° et pour sortir des données d'angle correspondantes; et
un dispositif de stockage de données (12) pour stocker ladite image captée sur la base des données d'image aussi bien que sur la base des données d'angle.

2. Appareil d'enregistrement d'image selon la revendication 1, dans lequel le capteur de rotation (14) présente une précision inférieure à 1°.

3. Appareil d'enregistrement d'image selon la revendication 1 ou 2, dans lequel le capteur (6) pour capter une image est un capteur optique pour sortir un signal représentant l'image.

4. Appareil d'enregistrement d'image selon la revendication 3, dans lequel l'appareil (12) est agencé de manière à stocker les données qui sont sorties par le capteur (6) et un élément de données représentant l'angle qui est mesuré par le capteur de rotation.

5. Appareil d'enregistrement d'image selon la revendication 3 comprenant encore un module de correction (16) pour corriger les données d'image captées qui sont basées sur la sortie du capteur de rotation et pour stocker les données d'image corrigées dans la mémoire.

6. Appareil d'enregistrement d'image selon l'une quelconque des revendications précédentes 1 à 5, dans lequel le capteur (6) présente une pluralité de pixels qui sont agencés en tant qu'une trame rectangulaire normale correspondant à une image non tournée concurremment avec des pixels additionnels (52) qui sont agencés autour de la périphérie de la trame normale de manière à fournir des données d'image additionnelles pour être utilisées dans le cas de rotation de l'image captée.

7. Appareil d'enregistrement d'image selon l'une quelconque des revendications précédentes 1 à 6, dans lequel les pixels du capteur (6) sont agencés en tant qu'une matrice circulaire de manière à permettre une rotation de l'image sous un angle arbitraire sans qu'il ne soit nécessaire de redimensionner la trame d'image.

8. Appareil d'enregistrement d'image selon l'une quelconque des revendications précédentes 1 à 7 comprenant une pluralité de capteurs (6) pour permettre la correction d'image dans un certain nombre de plans.

9. Procédé de traitement d'information d'image, comprenant les étapes consistant à:
capter des informations d'image dans une caméra (2);
mesurer l'angle d'orientation de la caméra par rapport à l'horizontale réelle avec une précision inférieure à 5°, et
enregistrer des données d'image qui sont basées sur les informations d'image et sur l'orientation mesurée de la caméra (2).

10. Procédé selon la revendication 9, dans lequel l'étape consistant à enregistrer des données d'image enregistre les informations d'image et l'orientation mesurée de la caméra, le procédé comprenant encore les étapes consistant à:
corriger les données d'image enregistrées qui sont basées sur l'orientation mesurée de la caméra (2); et
lire les informations d'image corrigées.
